# EUROPEAN PATENT SPECIFICATION

(11) **EP 2 058 536 B1**
(45) Date of publication and mention of the grant of the patent: **21.07.2010**
(21) Application number: 07123999.0
(22) Date of filing: 21.12.2007
(51) Int. Cl.: F16C 17/02, F16C 17/10

(54) **Bearing bush**
Lagerbuchse
Coussinet de palier

(30) Priority: 08.11.2007 EP 07120298
(43) Date of publication of application: 13.05.2009
(73) Proprietor: Saint-Gobain Performance Plastics Pampus GmbH, 47877 Willich (DE)
(72) Inventor: Ambroise, Caroline, 40476 Düsseldorf (DE); Küntzler, Lars-Boris, 47805 Krefeld (DE); Hartmann, Jürgen Dr., 47877 Willich (DE); Burgeff, Dominique, 4700 Eupen (BE)
(74) Representative: Cohausz & Florack

(56) References cited:
- WO-A-2005/105431
- WO-A-2007/113157
- WO-A-2008/080482
- DE-A1-102006 031 289
- US-A- 2 507 638
- US-A- 3 099 057
- US-A1- 2003 051 313

## Description

The invention relates to a bearing bush comprising an essentially cylindrical bush section and at least one radial flange arranged on an axial end of said cylindrical bush section. Furthermore, the invention relates to a bearing assembly and to an advantageous use of the bearing assembly. Further, the invention relates to a bordering tool for producing a flange on a bearing bush.

Bearing bushes, especially sliding bearing bushes, are widely used in various technical fields, e.g. in automotive engineering. In particular, bearing bushes are used in door hinges, pedal linkage systems, shock absorbers, hood, trunk and sun-roof mechanisms as well as in brake, suspension and transmission assemblies. Another important application is the use of sliding bearing bushes in automotive seat linkages. Those automotive seat linkages are generally designed with little or no clearance to allow for a smooth and noiseless movement of the seat elements relative to each other. If the pivot assembly is too tight then unwanted friction and torque are generated. If the pivot assembly is too lose then noise vibrations and rattling might appear.

The overall clearance of a pivot assembly is a direct function of the tolerance of the individual assembly components, namely the pin or screw with nut, the housing (typically the linkage itself) and the sliding bearing. A tight assembly tolerance is only made possible when all the components have own tight tolerances, or when the components are selectively matched to each other.

A solution to achieve a very small clearance despite the individual tolerances of the assembly components would be to introduce an additional element allowing compensation of the tolerances both an axial and in radial direction. The compensation could be achieved through deformation of this very element. For example, spring washers could be used to compensate the axial tolerance. Likewise, a tolerance ring could also compensate the clearance in radial direction. However, this solutions increase the number of components and therefore the total cost of the assembly.

A prior art document WO 2007/113157-A (SAINT GOBAIN PERFORMANCE PLAST, 2007-10-11) describes a standard bearing bush which comprises a bearing housing 1 and a bearing sleeve 2 which is inserted into the bearing housing 1, wherein both the bearing sleeve 2 and the bearing housing 1 are open axially. The bearing arrangement further comprises a shaft S which is inserted with an oversize into the bearing sleeve 2 in such a way that the bearing sleeve 2 and the bearing housing expand.

The bearing sleeve comprises an essentially cylindrical bush section and on both ends a radial flange 2b presenting a flat shape .

Another solution currently practiced consists of using a sliding bearing bush with a V-shaped flange. i.e. the bearing bush is of funnel shape. The V-shaped flange acts as a spring and helps to compensate tolerances in the axial direction. However, this bearing design does not allow a radial tolerance compensation. Furthermore, V-shaped bearings are bound to tangle to each other when transported in bulk thus generating feeding issues at the pivot assembly line.

It is thus an object of the invention to provide a bearing bush having at least one radial flange the bearing bush being of simple shape thereby allowing for both axial and radial tolerance compensation in a bearing assembly. It is a further object of the invention to provide a bearing assembly with axial and radial tolerance compensation. It is a further object of the invention to provide a forming tool for forming the flange of a bearing bush.

The first object is achieved according to the invention by a bearing bush comprising an essentially cylindrical bush section and at least one radial flange arranged on an axial end of said cylindrical bush section, the bearing bush being characterized in that the at least one flange has a mushroom shaped cross section so as to allow axial and radial tolerance compensation in a bearing assembly.

The tolerance compensation is achieved via the at least one mushroom shaped flange. The mushroom shape allows the flange to act as a spring washer thus compensating for axial clearance through spring back effect. This mushroom shape further allows also to prestress and partly deform the bearing bush on its cylindrical surface during assembly. The resulting deformation is able to compensate for the radial clearance between the housing/bearing bush/pin in a bearing assembly.

According to an advantageous embodiment of the invention the bearing bush is made of a sliding bearing material. In turn, the sliding bearing material may comprise a metallic support and an overlay forming the sliding layer. During use of the bearing bush in a bearing assembly the overlay is in sliding contact with the pin thus ensuring low friction and reduced maintenance. Preferably, the overlay contains a plastic material as a sliding material, in particular a high-temperature plastic material, preferably a fluoroplastic material, especially Polytetrafluorethylene, Polyimide, Polyamidimide, Polyvinylidenfluoride, Perfluoralkoxy-Copolymer, Polyetherketone, Polyethylene, preferably Polyethylene of ultra high molecular weight, or a combination thereof. The metallic support may consist of steel, in particular special steel, copper, titanium, bronze, aluminium or an alloy thereof. These materials ensure the right degree of rigidity of the bearing material to allow good tolerance compensation.

According to a further advantageous embodiment the sliding bearing material further comprises a reinforcement material. This may have an open structure. In this case the overlay material may at least partly fill the openings of the reinforcement material, which makes the overlay stronger and more tear-resistant. Reinforcement materials having an open structure may be a fabric, in particular a wire mesh, an expanded metal, a fleece, in particular a metal fleece, a metal foam, a perforated plate and/or a metallic substrate and a series of raised structures formed integrally therewith and extending orthogonally therefrom. The reinforcement material may consist of metal, in particular steel, preferably special steel, bronze, copper, chrome, nickel, zinc, zinc-ferrous alloy, zinc-nickel alloy and/or aluminium or alloy thereof.

The bearing bush may be produced in various ways. It may be a deep-drawn bearing bush as well as a wrapped bearing bush shaped from an initially flat material. In the latter case the bearing bush has an axial slit wherein the slit may be inclined relative to a longitudinal axis of the bearing bush and wherein the slit may be straight or have a special design like Z-shape or omega-shape.

According to another embodiment the bearing bush has a flange with a mushroom shaped cross section on one axial end of the bush section and a tapered end section on the other axial end so as to facilitate insertion of the bearing bush into a housing.

According to an alternative embodiment of the invention the bearing bush in assembled condition, i.e. when integrated in a bearing assembly, has two flanges each having a mushroom shaped cross section and each being disposed on one axial end of the bush section. A bearing bush having two flanges is particularly suitable for both axial and radial tolerance compensation in a bearing assembly. In addition, a bearing bush having two flanges is axially securely fastened to the housing. It is to be understood that a bearing bush having a mushroom shaped flange on one end and e flat or V-shaped flanged on the other end is also possible.

A particularly effective axial and radial tolerance compensation in a bearing assembly is achieved when the ratio of the height of the mushroom cross section, i.e. the extent of the mushroom cross section in the longitudinal direction of the bearing bush, and the thickness of the bearing material is 1,5 to 2. For example, when the thickness of the bearing material is 0,5 mm the height of the mushroom cross section may be 0,75 mm so that the ratio defined above is 1,5.

The radial extent of the mushroom shaped flange is preferably adapted to the inner diameter of the bush section. According to a preferred embodiment the ratio of the flange diameter and the inner diameter of the bush section is approximately 1,0 to 2,0, in particular approximately 1,4 to 1,6. In case of a deep-drawn bush the ratio of the flange diameter and the inner diameter of the bush section is larger than 1,0.

A second aspect of the invention relates to a bearing assembly comprising at least one housing, a bearing pin and a bearing bush disposed between the at least one housing and the bearing pin, wherein the bearing bush is designed according to any one of claims 1 to 16. The advantages of the bearing bush set out in detail above also apply for the bearing assembly according to the invention. In particular, the bearing assembly ensures a high degree of both axial and radial tolerance compensation.

A third aspect of the invention relates to automotive applications comprising at least one bearing assembly according to claim 19 or 22 for hinged connection of individual components. The use of the bearing assembly comprising a bearing bush according to the invention ensures smooth and noiseless and vibration free movement of the individual linkage elements relative to each other.

A fourth aspect of the invention relates to a forming tool for producing a flange on an axial end of a bearing bush having a cylindrical bush section, wherein the forming tool comprises a forming mandrel having a circumferential shoulder (dead stop) and a counter tool having a cylindrical inner surface surrounding the cylindrical bush section of the bearing bush to be bordered, wherein the counter tool has an annular end face serving as stop face for the mandrel, wherein the circumferential shoulder of the mandrel and the annular end face of the counter tool are formed such that the flange of the bearing bush is formed with a mushroom shaped cross section.

The forming tool according to the invention allows for a precise manufacture of the mushroom shaped flange with a high degree of reproducibility.

It is to be understood that a conical shape of the bush section of the bearing bush in combination with at least one flange having a mushroom shaped cross section also allows for radial and axial tolerance compensation and is thus within the scope of the invention.

The invention is explained in more detail below with reference to the drawings representing an embodiment, in which:
- Fig. 1: shows a bearing bush according to the prior art in a longitudinal sectional view;
- Fig. 2a,b: shows a bearing bush having one flange with a mushroom shaped cross section according to the invention and a detail of the flange;
- Fig. 3: shows the bearing bush of Fig. 2 in a top view;
- Fig. 4: shows a forming mandrel and a counter tool holding a bearing bush in the home position of the forming tool in a sectional view;
- Fig. 5: shows the forming mandrel and the counter tool of Fig. 5 in a terminal forming position in a sectional view;
- Fig. 6: shows a forming tool for producing a second flange on a bearing bush inserted into the housing of a bearing assembly in a home position in a sectional view;
- Fig. 7: shows the forming mandrel and the counter tool of Fig. 7 in a terminal forming position in a sectional view; and
- Fig. 8: shows the bearing bush of Fig. 7 in the housing after completion of the forming process.
- Fig. 9: shows a bearing assembly according to the invention where axial tolerance compensation is achieved; and
- Fig. 10: shows a bearing assembly according to the invention where both axial and radial tolerance compensation are achieved.

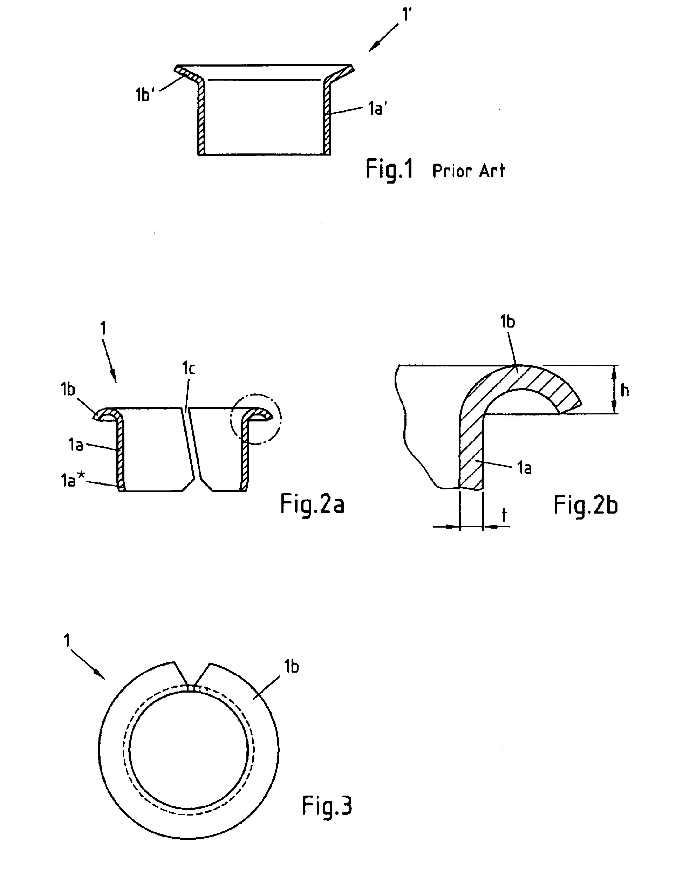

The prior art bearing bush 1' shown in Fig. 1 has a cylindrical bush section 1a' and a V-shaped flange 1b' on one axial end of the bush section la'. When integrated into a bearing assembly (not shown) the V-shaped flange 1b' of the bearing bush 1' according to prior art acts as a spring and thus aids to compensate tolerances in axial direction. A radial tolerance compensation is, however, not possible.

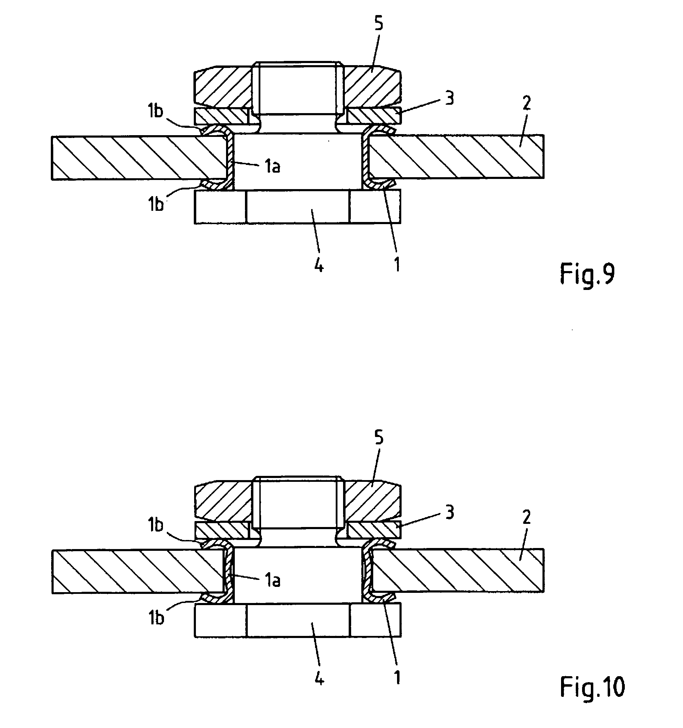

Fig. 2a shows a bearing bush 1 according to the invention. The bearing bush 1 comprises a cylindrical bush section 1a and one radial flange 1b arranged on the axial upper end of the bush section 1a. As can be seen in Fig. 2a and especially in Fig. 2b the flange 1b has a mushroom shaped cross section so as to allow axial or axial and radial tolerance compensation in a bearing assembly, which will be explained below with reference to Fig. 10 and 11.

The mushroom shape allows the flange 1b to act as a spring washer thus compensating for axial clearance through spring back effect. This mushroom shape of the flange's cross section further allows also to prestress and partly deform the bearing bush 1 on its cylindrical surface during assembly.

The composition of the bearing material the bearing bush 1 is made of is not shown in detail in Fig. 2. Preferably, the bearing material is a sliding bearing material comprising a metallic support and an overlay as the sliding layer, wherein the metallic support presently consists of steel or aluminium. The overlay material presently contains a plastic material, preferably a high-temperature fluoroplastic material, especially Polytetrafluorethylene. The sliding bearing material may further comprise a reinforcement material with an open structure, such as a fabric, in particular a wire mesh, an expanded metal, a fleece, in particular a metal fleece, a metal foam, a perforated plate and/or a metallic substrate and a series of raised structures formed integrally therewith and extending orthogonally therefrom.

As can be seen in Fig. 2a the bearing bush 1 according to the invention is a wrapped bush shaped from an initially flat bearing material. The bearing bush 1 has an axial slit 1c wherein the slit 1c is inclined relative to the longitudinal axis of the bearing bush 1 at an angle of approximately 10°. In order to facilitate insertion of the bearing bush 1 into a housing the bearing bush 1 has a tapered end section 1a* on the axial end of the bush section 1a opposing the flange 1b.

As mentioned above the bearing bush 1 according to the invention allows for both axial and radial tolerance compensation in a bearing assembly. An exceptionally effective tolerance compensation may be achieved when the ratio of the height h of the mushroom cross section, i.e. the extent of the mushroom cross section in the longitudinal direction of the bearing bush, and the thickness t of the bearing material is 1,5 to 2 (see Fig. 2b). A bush bearing 1 according to the invention that has a material thickness of approx. 0,5 mm and a height h of the mushroom cross section of approx. 0,75 mm may allow for a tolerance compensation of 0,1 - 0,3 mm.

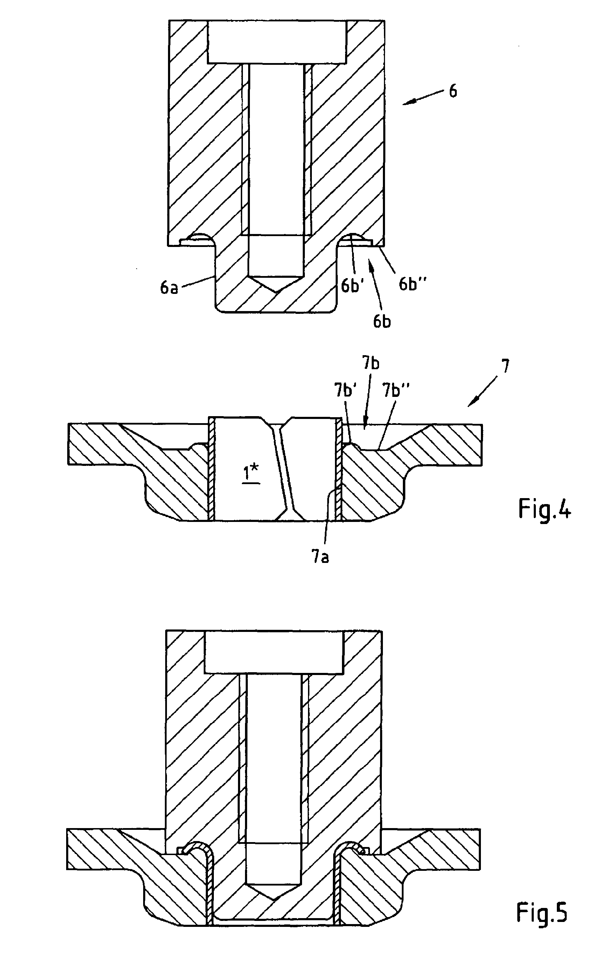

In Fig. 4 through 8 a method for producing of a bearing bush 1 according to the invention is shown. The method is carried out using a bordering tool, which will be described in detail with reference to Fig. 5.

According to invention the forming tool for producing a flange 1b on an axial end of a bearing bush having an cylindrical bush section 1a comprises a forming mandrel 6 and a counter tool 7. The forming mandrel 6 has a circumferential shoulder 6b (dead stop) and an axial front section 6a having a reduced diameter radially limited by the shoulder 6b. In turn, the counter tool 7 has a cylindrical inner surface 7a surrounding the cylindrical bush section 1a of the bearing bush 1 to be formed. Further, the counter tool 7 has an annular end face 7b. According to the invention the circumferential shoulder 6b of the forming mandrel 6 and the annular end face 7b of the counter tool 7 are formed such that the flange 1b of the bearing bush 1 is formed with a mushroom shaped cross section. In particular, the circumferential shoulder 6b of the forming mandrel 6 comprises a concave annular face 6b' and a surrounding flat ring area 6b" serving as a dead stop during the bordering process. Correspondingly, the annular end face has a convex annular face 7b' surrounded by a flat ring area 7b " as counter face relative to the flat ring area 6b ".

Prior to forming the yet cylindrical bearing bush 1* is inserted into the counter tool 7 so as to be encompassed by the cylindrical inner surface 7a of the counter tool 7. The end section of the bearing bush 1* to be formed projects from the upper end of the cylindrical inner surface 7a and the convex annular face 7b' of the counter tool 7, respectively. After insertion of the bearing bush 1* the forming mandrel 6 is moved towards the counter tool 7 such that the axial front section 6a of the forming mandrel 6 whose outer diameter corresponds to the inner diameter of the bearing bush 1* to be formed plunges into the bearing bush 1*. The forming mandrel 6 continues its movement such that the concave annular face 6b' forces the projecting end section of the bearing bush 1* to expand outwardly. As the plunger 6 moves further into the counter tool 7 the expanding end section of the bush bearing 1* contacts the convex ring area 7b' of the counter tool 7 and is eventually forced to attain the mushroom shape of the annular gap defined between the annular faces 6b', 7b'. The desired thickness is set by the contact of the dead stop 6b" and the flat ring area 7b" as can be seen in Fig. 5.

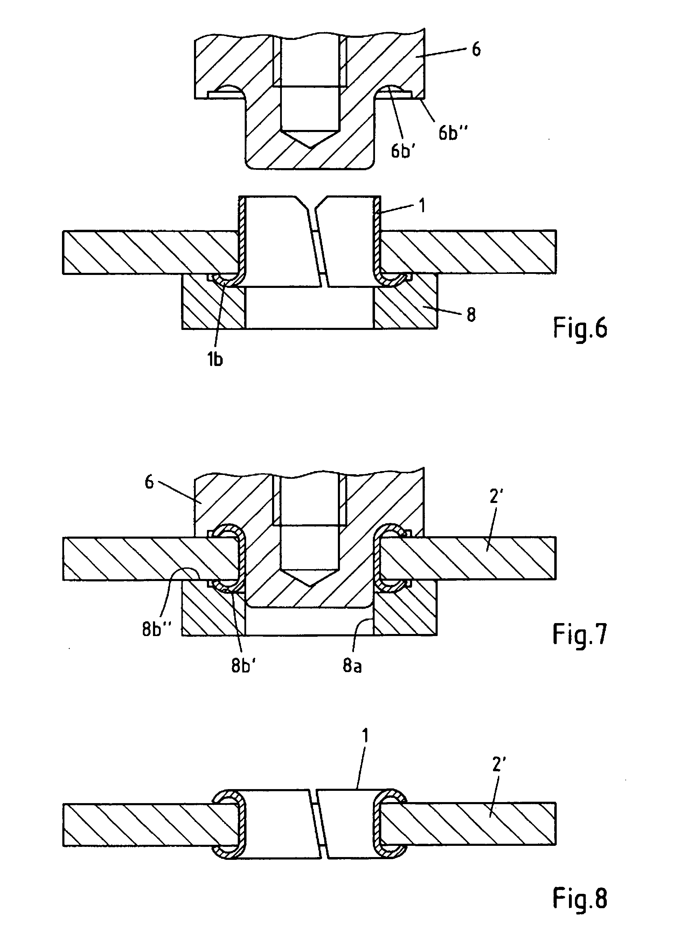

After completion of the first forming step the bush bearing 1 now having one flange 1b with a mushroom cross section is removed from the counter tool 7 and inserted into a bearing housing 2'. The flange 1b is secured by a second counter tool 8 having a concave annular face 8b' and a dead stop 8b " such that during the following second forming step the mushroom shape will not be altered (see Fig. 6). The end section of the bearing bush 1 opposing the flange 1b projects from the housing 2' and faces the forming mandrel 6. For forming the second flange the forming mandrel 6 moves towards the bush bearing 1 and plunges into it whereby the concave annular face 6b' forces the projecting end section of the bearing bush 1 to expand outwardly as can be seen in Fig. 7. As the forming mandrel 6 moves further into the bearing bush 1 the mushroom shape preset by the concave annular face 6b' of the forming mandrel is imposed upon the expanding end section of the bush bearing 1. The movement of the plunger 6 which contacts a cylindrical inner surface 8a of the second counter tool 8 is terminated by the dead stop ring area 6b" abutting the housing 2'. Finally, the housing 2' and the bearing bush 1 now being secured to the housing 2' (see Fig. 8) are removed from the bordering tool.

In Fig. 9 a bearing assembly according to the invention is shown. It comprises a first housing 2, which may belong to a component of an automotive seat (not shown), for example the bottom part of the seat, and a second housing 3, which in turn may belong to another component of an automotive seat, for example the seat's back rest. Furthermore, the bearing assembly comprises a bearing bush 1 which has a flange 1b having a mushroom shaped cross section on each of its axial ends. A screw 4 is inserted into the bearing bush 1 and fastened by a screw nut 5 thus securing the bearing assembly. As can be seen in Fig. 10 the nut 5 is screwed onto the screw 4 such that the flanges 1b of the bearing bush 1 are slightly squeezed by the screw head and the housing 3, respectively. The bush bearing 1 according to Fig. 9 thus allows for axial tolerance compensation in the bearing assembly.

Another bearing assembly according to the invention is shown in Fig. 10. It differs from the one shown in Fig. 9 in that the outer diameter of the screw 4 is slightly less than the inner diameter of the first housing 2 such that there is radial clearance between the screw 4 and the housing 2. As the nut 5 is screwed onto the screw 4 the cylindrical bush section 1a is deformed such that it attains a wavy shape as can be seen in Fig. 10. At the same time the flanges 1b of the bearing bush 1 are slightly squeezed by the screw head and the housing 3 as in the case of Fig. 9. Thereby, the bush bearing 1 according to Fig. 10 allows for both axial and radial tolerance compensation in the bearing assembly.

## Claims

1. Bearing bush (1) comprising an essentially cylindrical bush section (1a) and at least one radial flange (1b) arranged on an axial end of said cylindrical bush section (1a),
**characterised in that**
the at least one flange (1b) has a mushroom shaped cross section so as to allow axial and radial tolerance compensation in a bearing assembly, wherein the bearing bush (1) is made of a sliding bearing material comprising a metallic support and an overlay forming the sliding layer.

2. Bearing bush (1) according to claim 1,
**characterized in that**
the overlay contains a plastic material as a sliding material, in particular a high-temperature plastic material, preferably a fluoroplastic material, especially Polytetrafluorethylene, Polyimide, Polyamidimide, Polyvinylidenfluoride, Perfluoralkoxy-Copolymer, Polyetherketone, Polyethylene, preferably Polyethylene of ultra high molecular weight, or a combination thereof.

3. Bearing bush (1) according to claim 1 or 2;
**characterized in that**
the metallic support consists of steel, in particular special steel, copper, titanium, bronze, aluminium or an alloy thereof.

4. Bearing bush (1) according to any one of claims 1 to 3,
**characterized in that**
the sliding bearing material further comprises a reinforcement material.

5. Bearing bush (1) according to claim 4,
**characterized in that**
the reinforcement material has an open structure.

6. Bearing bush (1) according to claims 5,
**characterized in that**
the reinforcement material having an open structure is a fabric, in particular a wire mesh, an expanded metal, a fleece, in particular a metal fleece, a metal foam, a perforated plate and/or a metallic substrate and a series of raised structures formed integrally therewith and extending orthogonally therefrom.

7. Bearing bush (1) according to any one of claims 4 to 6,
**characterized in that**
the reinforcement material consists of metal, in particular steel, preferably special steel, bronze, copper, chrome, nickel, zinc, zinc-ferrous alloy, zinc-nickel alloy and/or aluminium or alloy thereof.

8. Bearing bush (1) according to any one of claims 1 to 7,
**characterized in that**
the bearing bush (1) is a wrapped bearing bush having an axial slit (1c).

9. Bearing bush (1) according to claim 8,
**characterized in that**
the axial slit (1c) is inclined with respect to a longitudinal axis of the bearing bush (1).

10. Bearing bush (1) according to claims 8 or 9,
**characterized in that**
the axial slit (1c) has a special profile, in particular a z-shape or an omega-shape.

11. Bearing bush (1) according to any one of claims 1 to 7,
**characterized in that**
the bearing bush (1) is deep-drawn.

12. Bearing bush (1) according to any one of claims 1 to 11,
**characterized in that**
the bearing bush (1) has a flange (1b) with a mushroom shaped cross section on one axial end of the bush section (1a) and a tapered end section (1a*) on the other axial end so as to facilitate insertion of the bearing bush (1) into a housing (2, 3).

13. Bearing bush (1) according to any one of claims 1 to 11,
**characterized in that**
the bearing bush (1) has two flanges (1b) in assembled condition, each having a mushroom shaped cross section and each being disposed on one axial end of the bush section (1a).

14. Bearing bush (1) according to any one of claims 1 to 13,
**characterized in that**
the ratio of the height of the mushroom shaped cross section and the thickness of the bearing material is 1,5 to 2.

15. Bearing bush (1) according to any one of claims 1 to 14,
**characterized in that**
the ratio of the flange diameter and the inner diameter of the bush section is approximately 1,0 to 2,0, in particular approximately 1,4 to 1,6.

16. Bearing bush (1) according to claim 11,
**characterized in that**
the ratio of the flange diameter and the inner diameter of the bush section is > 1,0

17. Bearing assembly comprising at least one housing, a bearing pin (4) and a bearing bush (1) disposed between the at least one housing (2, 3) and the bearing pin (4), wherein the bearing bush (1) is designed according to any one of claims 1 to 14.

18. Bearing assembly according to claim 17,
**characterized in that**
the bearing pin is a screw-nut assembly (4, 5).

19. Bearing assembly according to claim 17 **characterized in that** the bearing pin is a shear tension bolt assembly.

20. Bearing assembly according to claim 17 **characterized in that** the bearing pin is a rivet assembly.

21. Automotive seat comprising at least one bearings assembly according to any one of claims 17 or 20 for hinged connection of individual seat linkages

22. Automotive door hinge comprising at least one bearing assembly according to any one of claims 17 to 20 for hinged connection of individual hinge components.

23. Automotive trunk or hood hinge comprising at least one bearing assembly according to any one of claims 17 to 20 for hinged connection of individual hinge components.

24. Automotive windshield wiper arm hinge comprising at least one bearing assembly according to any one of claims 17 to 20 for hinged connection of individual hinge components.

25. Automotive belt tensioner comprising at least one bearing assembly according to any one of claims 17 to 20 for hinged connection of individual hinge components.

26. Automotive pedal hinge comprising at least one bearing assembly according to any one of claims 11 or 20 for hinged connection of individual hinge components.

## Patentansprüche

1. Lagerbuchse (1), die einen im Wesentlichen zylindrischen Buchsenabschnitt (1a) und mindestens einen radialen Flansch (1b) umfasst, der an einem axialen Ende des zylindrischen Buchsenabschnitts (1a) angeordnet ist,
**dadurch gekennzeichnet, dass**
der mindestens eine Flansch (1b) einen pilzförmigen Querschnitt aufweist, um einen Axial- und Radialtoleranzausgleich in einer Lageranordnung zu gestatten, wobei die Lagerbuchse (1) aus einem Gleitlagermaterial hergestellt ist, das einen metallischen Träger und eine die Gleitschicht bildende Beschichtung umfasst.

2. Lagerbuchse (1) nach Anspruch 1,
**dadurch gekennzeichnet, dass**
die Beschichtung ein Kunststoffmaterial als Gleitmaterial enthält, insbesondere ein Hochtemperaturkunststoffmaterial, vorzugsweise ein Fluorkunststoffmaterial, insbesondere Polytetrafluorethylen, Polyimid, Polyamidimid, Polyvinylidenfluorid, Perfluoralkoxy-Copolymer, Polyetherketon, Polyethylen, vorzugsweise ultrahochmolekulares Polyethylen oder eine Kombination daraus.

3. Lagerbuchse (1) nach Anspruch 1 oder 2,
**dadurch gekennzeichnet, dass**
der metallische Träger aus Stahl besteht, insbesondere Sonderstahl, Kupfer, Titan, Bronze, Aluminium oder einer Legierung daraus.

4. Lagerbuchse (1) nach einem der Ansprüche 1 bis 3,
**dadurch gekennzeichnet, dass**
das Gleitlagermaterial weiterhin ein Verstärkungsmaterial umfasst.

5. Lagerbuchse (1) nach Anspruch 4,
**dadurch gekennzeichnet, dass**
das Verstärkungsmaterial eine offene Struktur aufweist.

6. Lagerbuchse (1) nach Anspruch 5,
**dadurch gekennzeichnet, dass**
das eine offene Struktur aufweisende Verstärkungsmaterial ein textiles Flächengebilde, insbesondere ein Drahtgeflecht, ein Streckmetall, ein Vlies, insbesondere ein Metallvlies, ein Metallschaum, eine perforierte Platte und/oder ein metallisches Substrat und eine Reihe von integral damit ausgebildeten erhabenen Strukturen, die sich orthogonal davon erstrecken, ist.

7. Lagerbuchse (1) nach einem der Ansprüche 4 bis 6,
**dadurch gekennzeichnet, dass**
das Verstärkungsmaterial aus Metall besteht, insbesondere Stahl, vorzugsweise Sonderstahl, Bronze, Kupfer, Chrom, Nickel, Zink, einer Zink-Eisen-Legierung, einer Zink-Nickel-Legierung und/oder Aluminium oder einer Legierung daraus.

8. Lagerbuchse (1) nach einem der Ansprüche 1 bis 7,
**dadurch gekennzeichnet, dass**
die Lagerbuchse (1) eine gerollte Lagerbuchse mit einem axialen Schlitz (1c) ist.

9. Lagerbuchse (1) nach Anspruch 8,
**dadurch gekennzeichnet, dass**
der axiale Schlitz (1c) bezüglich einer Längsachse der Lagerbuchse (1) geneigt ist.

10. Lagerbuchse (1) nach Anspruch 8 oder 9,
**dadurch gekennzeichnet, dass**
der axiale Schlitz (1c) ein spezielles Profil aufweist, insbesondere eine Z-Form oder eine Omega-Form.

11. Lagerbuchse (1) nach einem der Ansprüche 1 bis 7,
**dadurch gekennzeichnet, dass**
die Lagerbuchse (1) tiefgezogen ist.

12. Lagerbuchse (1) nach einem der Ansprüche 1 bis 11,
**dadurch gekennzeichnet, dass**
die Lagerbuchse (1) einen Flansch (1b) mit einem pilzförmigen Querschnitt an einem axialen Ende des Buchsenabschnitts (1a) und einem sich verjüngenden Endabschnitt (1a*) am anderen axialen Ende aufweist, um das Einführen der Lagerbuchse (1) in ein Gehäuse (2, 3) zu erleichtern.

13. Lagerbuchse (1) nach einem der Ansprüche 1 bis 11,
**dadurch gekennzeichnet, dass**
die Lagerbuchse (1) zwei Flansche (1b) in zusammengefügtem Zustand aufweist, wobei jeder davon einen pilzförmigen Querschnitt aufweist und an einem axialen Ende des Buchsenabschnitts (1a) angeordnet ist.

14. Lagerbuchse (1) nach einem der Ansprüche 1 bis 13,
**dadurch gekennzeichnet, dass**
das Verhältnis der Höhe des pilzförmigen Querschnitts und der Dicke des Lagermaterials 1,5 bis 2 beträgt.

15. Lagerbuchse (1) nach einem der Ansprüche 1 bis 14,
**dadurch gekennzeichnet, dass**
das Verhältnis des Flanschdurchmessers und des Innendurchmessers des Buchsenabschnitts ca. 1,0 bis 2,0, insbesondere ca. 1,4 bis 1,6 beträgt.

16. Lagerbuchse (1) nach Anspruch 11,
**dadurch gekennzeichnet, dass**
das Verhältnis des Flanschdurchmessers und des Innendurchmessers des Buchsenabschnitts > 1,0 ist.

17. Lageranordnung, die mindestens ein Gehäuse, einen Lagerzapfen (4) und eine Lagerbuchse (1), die zwischen dem mindestens einen Gehäuse (2, 3) und dem Lagerzapfen (4) angeordnet ist, umfasst, wobei die Lagerbuchse (1) gemäß einem der Ansprüche 1 bis 14 ausgeführt ist.

18. Lageranordnung (1) nach Anspruch 17,
**dadurch gekennzeichnet, dass**
der Lagerzapfen eine Schrauben-Mutter-Anordnung (4, 5) ist.

19. Lageranordnung nach Anspruch 17,
**dadurch gekennzeichnet, dass**
der Lagerzapfen eine Scherzugbolzenanordnung ist.

20. Lageranordnung nach Anspruch 17,
**dadurch gekennzeichnet, dass**
der Lagerzapfen eine Nietanordnung ist.

21. Kraftfahrzeugsitz, der mindestens eine Lageranordnung nach einem der Ansprüche 17 oder 20 zur Scharnierverbindung einzelner Sitzgestänge umfasst.

22. Kraftfahrzeugtürscharnier, das mindestens eine Lageranordnung nach einem der Ansprüche 17 bis 20 zur Scharnierverbindung einzelner Scharnierkomponenten umfasst.

23. Kraftfahrzeugkofferraum- oder -motorhaubenscharnier, das mindestens eine Lageranordnung nach einem der Ansprüche 17 bis 20 zur Scharnierverbindung einzelner Scharnierkomponenten umfasst.

24. Kraftfahrzeugwindschutzscheibenwischerarmscharnier, das mindestens eine Lageranordnung nach einem der Ansprüche 17 bis 20 zur Scharnierverbindung einzelner Scharnierkomponenten umfasst.

25. Kraftfahrzeuggurtspanner, der mindestens eine Lageranordnung nach einem der Ansprüche 17 bis 20 zur Scharnierverbindung einzelner Scharnierkomponenten umfasst.

26. Kraftfahrzeugpedalscharnier, das mindestens eine Lageranordnung nach einem der Ansprüche 17 oder 20 zur Scharnierverbindung einzelner Scharnierkomponenten umfasst.

## Revendications

1. Coussinet de palier (1), comprenant une section de coussinet essentiellement cylindrique (1a) et au moins une bride radiale (1b) agencée sur une extrémité axiale de ladite section de coussinet cylindrique (1a), **caractérisé en ce que** ladite au moins une bride (1b) présente une section transversale en forme de champignon de manière à permettre une compensation de tolérance axiale et radiale dans un ensemble de palier, dans lequel le coussinet de palier (1) est constitué d'un matériau de palier antifriction composé d'un support métallique et d'un revêtement qui forme la couche antifriction.

2. Coussinet de palier (1) selon la revendication 1, **caractérisé en ce que** le revêtement contient une matière plastique faisant office de matériau antifriction, en particulier une matière plastique à haute température, de préférence une matière fluoroplastique, en particulier le polytétrafluoroéthylène, le polyimide, le polyamidimide, le fluorure de polyvinylidène, le perfluoroalkoxy copolymère, le polyéthercétone, le polyéthylène, de préférence le polyéthylène de poids moléculaire ultra élevé, ou une combinaison de ceux-ci.

3. Coussinet de palier (1) selon la revendication 1 ou 2, **caractérisé en ce que** le support métallique est constitué d'acier, en particulier d'acier spécial, de cuivre, de titane, de bronze, d'aluminium ou d'un alliage de ceux-ci.

4. Coussinet de palier (1) selon l'une quelconque des revendications 1 à 3, **caractérisé en ce que** le matériau de palier antifriction comprend en outre un matériau de renforcement.

5. Coussinet de palier (1) selon la revendication 4, **caractérisé en ce que** le matériau de renforcement présente une structure ouverte.

6. Coussinet de palier (1) selon la revendication 5, **caractérisé en ce que** le matériau de renforcement qui présente une structure ouverte est un tissu, en particulier un treillis, un métal déployé, une toile, en particulier une toile métallique, une mousse métallique, une plaque perforée et/ou un substrat métallique et une série de structures saillantes formées intégralement avec celui-ci et s'étendant de façon orthogonale à partir de celui-ci.

7. Coussinet de palier (1) selon l'une quelconque des revendications 4 à 6, **caractérisé en ce que** le matériau de renforcement est de préférence constitué de métal, en particulier d'acier, de préférence un acier spécial, de bronze, de cuivre, de chrome, de nickel, de zinc, d'un alliage de zinc et de fer, d'un alliage de zinc et de nickel et/ou d'aluminium ou d'un alliage de ceux-ci.

8. Coussinet de palier (1) selon l'une quelconque des revendications 1 à 7, **caractérisé en ce que** le coussinet de palier (1) est un coussinet de palier enroulé qui comporte une fente axiale (1c).

9. Coussinet de palier (1) selon la revendication 8, **caractérisé en ce que** la fente axiale (1c) est inclinée par rapport à un axe longitudinal du coussinet de palier (1).

10. Coussinet de palier (1) selon la revendication 8 ou 9, **caractérisé en ce que** la fente axiale (1c) présente un profil spécial, en particulier en forme de Z ou en forme d'oméga.

11. Coussinet de palier (1) selon l'une quelconque des revendications 1 à 7, **caractérisé en ce que** le coussinet de palier (1) est embouti profondément.

12. Coussinet de palier (1) selon l'une quelconque des revendications 1 à 11, **caractérisé en ce que** le coussinet de palier (1) comporte une bride (1b) qui présente une section transversale en forme de champignon sur une extrémité axiale de la section de coussinet (1a), et une section d'extrémité conique (1a*) sur l'autre extrémité axiale de manière à faciliter l'insertion du coussinet de palier (1) dans un boîtier (2, 3).

13. Coussinet de palier (1) selon l'une quelconque des revendications 1 à 11, **caractérisé en ce que** le coussinet de palier (1) comporte deux brides (1b) dans la condition assemblée, chaque bride présentant une section transversale en forme de champignon, et chaque bride étant disposée sur une extrémité axiale de la section de coussinet (1a).

14. Coussinet de palier (1) selon l'une quelconque des revendications 1 à 13, **caractérisé en ce que** le rapport entre la hauteur de la section transversale en forme de champignon et l'épaisseur du matériau de palier est compris entre 1,5 et 2.

15. Coussinet de palier (1) selon l'une quelconque des revendications 1 à 14, **caractérisé en ce que** le rapport du diamètre de la bride et du diamètre intérieur de la section de coussinet est approximativement compris entre 1,0 et 2,0, en particulier approximativement entre 1,4 et 1,6.

16. Coussinet de palier (1) selon la revendication 11, **caractérisé en ce que** le rapport entre le diamètre de la bride et le diamètre intérieur de la section de coussinet est supérieur à 1,0.

17. Ensemble de palier comprenant au moins un boîtier, une broche de palier (4) et un coussinet de palier (1) disposé entre ledit au moins un boîtier (2, 3) et la broche de palier (4), dans lequel le coussinet de palier (1) est conçu selon l'une quelconque des revendications 1 à 14.

18. Ensemble de palier selon la revendication 17, **caractérisé en ce que** la broche de palier est un ensemble d'écrou à vis (4, 5).

19. Ensemble de palier selon la revendication 17, **caractérisé en ce que** la broche de palier est un ensemble de vis de tension de cisaillement.

20. Ensemble de palier selon la revendication 17, **caractérisé en ce que** la broche de palier est un ensemble de rivet.

21. Siège d'automobile, comprenant au moins un ensemble de palier selon l'une quelconque des revendications 17 ou 20 pour la connexion articulée de liaisons de siège individuelles.

22. Charnière de porte d'automobile, comprenant au moins un ensemble de palier selon l'une quelconque des revendications 17 à 20 pour la connexion articulée de composants de charnière individuels.

23. Charnière de coffre ou de capot d'automobile, comprenant au moins un ensemble de palier selon l'une quelconque des revendications 17 à 20 pour la connexion articulée de composants de charnière individuels.

24. Charnière de bras d'essuie-glace de pare-brise d'automobile, comprenant au moins un ensemble de palier selon l'une quelconque des revendications 17 à 20 pour la connexion articulée de composants de charnière individuels.

25. Tendeur de ceinture de sécurité d'automobile, comprenant au moins un ensemble de palier selon l'une quelconque des revendications 17 à 20 pour la connexion articulée de composants de charnière individuels.

26. Charnière de pédale d'automobile, comprenant au moins un ensemble de palier selon l'une quelconque des revendications 17 ou 20 pour la connexion articulée de composants de charnière individuels.
